# EUROPEAN PATENT SPECIFICATION

(11) **EP 3 236 364 B1**
(45) Date of publication and mention of the grant of the patent: **08.01.2020**
(21) Application number: 16166117.8
(22) Date of filing: 20.04.2016
(51) Int. Cl.: G06Q 30/02

(54) **WEB TRACKING METHOD AND SYSTEM**
WEBTRACKING-VERFAHREN UND -SYSTEM
PROCÉDÉ ET SYSTÈME DE SUIVI SUR INTERNET

(43) Date of publication of application: 25.10.2017
(73) Proprietor: Traffiler GmbH, 80469 München (DE)
(72) Inventor: MIKULLA, Fredrik, 81929 Munich (DE); SYRTSOV, Evgeny, 81373 München (DE); LAJOSBANYAI, Dirk, 97294 Unterpleichfeld (DE); SCHILLING, Wolfgang, 71083 Herrenberg (DE)
(74) Representative: Qip Patentanwälte Dr. Kuehn & Partner mbB

(56) References cited:
- US-A1- 2002 077 836
- US-A1- 2008 114 875
- US-A1- 2011 197 136
- US-B1- 8 266 281

## Description

### FIELD OF THE INVENTION

The invention relates to a method, a system, a computer program, a computer-readable medium and a script element for determining, whether a web browser has accessed a third party web page.

### BACKGROUND OF THE INVENTION

For example for advertisement, it is beneficial to gather as much information about a web browser user (or customer) as possible. When a person and potential customer is surfing in the Internet, many servers track the web pages and links, the customer is visiting, to gather information about the interests of the person. One possibility to do this, is to embed Javascript © code in a web page, which, when executed by the browser of the user, informs a web server that the user has visited the web page. However, this kind of tracking is only possible, when the owner of the web page allows to embed the Javascript tracking code in the web page.

Most of the browsers have a cache, in which the previously visited web pages are stored. However, due to security constraints and the HTML standards obeying these constraints, it is not possible for a web server to access the cache.

Another possibility to track a user is via so-called cookies, which are small data objects stored in the web browser of the user. However, a cookie may only be accessed by the server, which has generated the web page, which has generated the cookie. It is not possible for a web server to access the cookies of a third party web page.

Additionally, cookies may be disabled by an option of the web browser. To circumvent this, other methods have been established such as Flash © cookies, in which the user information is stored elsewhere.

WO 2015/070752 A1 relates to a system, in which a logo picture, which may be embedded into a web page, is used for storing an identifier of a user.

US 2011/197 136 A1 describes a method for profiling a web browser instance. A web page on a web server comprises profiling code, which after the upload of the web page into a web browser is executed on the web server. It is described, that a loading time of an image may be compared with a threshold and when the loading time is smaller, it may be assumed that the image was already loaded into cache.

US 2008/114 875 A1 describes a performance monitoring system for a web browser that may be embodied as Javascript code embedded in a web page. With the Javascript code, timestamps of events may be created and saved and it may be determined, whether an image is cached by the web browser, when the image loads very fast.

US 8 266 281 B1 relates to collecting client-side performance metrics and latencies based on scripting code. It is mentioned that operation timings of rendering may be collected with scripting code.

US 2002/077 836 A1 relates to verification of service level agreement contracts, in which guaranteed performance parameters are tested based on script code. It is described how a responds time may be determined as difference between a sendtime and a current time.

### DESCRIPTION OF THE INVENTION

It is an objective of the invention to simplify user tracking.

This objective is achieved by the subject-matter of the independent claims. Further exemplary embodiments are evident from the dependent claims and the following description.

A first aspect of the invention relates to a method for determining, whether a web browser has accessed a third party web page. The method may be seen as a tracking method for tracking a user of the web browser (and in particular the activities of this user).

Web browsers are computer programs adapted for processing and displaying web pages, such as Internet Explorer ©, Firefox ©, Chrome ©, Safari ©, etc. A web page or HTML page or HTML document may be accessed by a web browser by a URL (uniform resource locator) and/or may be retrieved from the web server via the HTTP protocol. A web page may be encoded in the HTML language.

In the following, first, second and third party web servers are mentioned. A first party web server may be a first web server, which provides a (first party) web page that is accessed by a user of the web browser. The provider of the first party web server is the one having interest, whether the user also has accessed (third party) web pages of other providers.

A web server of one of these other providers is called third (party) web server. The provider of the first party web server usually does not have the possibility to include script elements (or other measures) into the web pages of the third party provider for tracking a user, when the user is accessing these web pages. For example, the provider of the first party web server and the provider of the third party web server may be competitors.

In the following, also a second (party) web server is mentioned. The provider of the second party web server may support the provider of the first party web server to perform the tracking method. The provider of the first party web server may be a customer of the provider of the second party web server. For example, the second party web server may provide script elements, which are used during the tracking method. It has to be understood that the first party web server also may be provided with the functionality of the second party web server, i.e. that the first party web server and the second party web server are the same.

According to an embodiment of the invention, the method comprises: providing a first party web page with a first party web server, which first party web page comprises or is adapted for loading a timing script element. In other words, the first party web page (which is accessed by the user with his web browser) may contain or embed a timing script element (usually in Javascript ©), which, when executed by the web browser, will perform the following method step. It also may be possible that the web page contains another script element, which, when executed by the web browser, will load and start the timing script element. A script element may be encoded in a web page with a <script>-tag.

Additionally, the method comprises: processing the first party web page with the web browser, such that the timing script element instructs the web browser to load an embedded element, which is embedded into a third party web page, into the web browser for a first time and determines a first loading time of the embedded element. After that, the timing script element instructs the web browser to load the embedded element into the web browser for a second time and determines a second loading time of the embedded element.

The method is adapted for determining, whether the user (or the web browser of the user) has previously accessed the third party web page. When the web browser loads and executes the first party web page, the timing script element loads one or more embedded elements from the other, third party web page for two times and every time determines the corresponding loading time of the respective embedded element.

For example, the timing script element may determine a loading start time, create dynamically an HTML element and/or HTML object for the embedded element and after that may determine a loading end time, when the web browser has evaluated the HTML element/object and eventually loaded into the cache. The loading time, for example the first and/or second loading time, then may be the difference between the loading end time and the loading start time. The loading start time and/or the loading end time may be determined by a call of a time function, such as "new Date()" or such as "performance.now" or "console.time" provided in specific Javascript implementations.

The loading start time may be determined, when the URL of the dynamically created HTML element/object is set. For example, for an embedded image and/or an embedded Javascript file as embedded element, the loading start time may be determined, when the "src" attribute is set.

The loading end time may be determined with a load event of the possibly dynamically created HTML element/object. The load event is called, when the embedded element has been loaded by the web browser. For example, the HTML tags <frame>, <frameset>, <iframe>, <img>, <input type="image">, <script> and <style> provide such a load event.

When the web browser already has accessed the third party web page, the third party web page (and its embedded elements) already have been loaded into the browser cache of the web browser and the first and second loading times are substantially the same. When the web browser has not accessed the third party web page, the embedded element has not been loaded into the browser cache and the first loading time usually is much longer than the second loading time due to the fact that the embedded element has to be loaded via Internet into the web browser.

The embedded element may be an element of the third party web page, which is requestable from the third party web server with an URL different from the URL of the third party web page. For example, the embedded element may be encoded with an HTML-tag that supports the "src"-attribute. Examples for such an embedded element are an image (<img>-tag) or a script element (<script>-tag). Another example for an embedded element is a cascading style sheet. All the above mentioned elements may be used as embedded element.

Furthermore, the method comprises: deciding based on the first loading time and second loading time, whether the web browser has previously loaded the third party web page. When the first loading time substantially differs from the second loading time, it may be decided that the web browser (and therefore the user) already has visited the third party web page. The decision, whether two loading times differ may be calculated by the web browser (with the script element) and/or by the first party web server and/or by the second party web server.

It has to be noted that it may be possible that since the last visit of the third party web page, the cache or the corresponding part of the cache of the web browser has been deleted. In this case, it may be (falsely) concluded that the user has not visited the third party web page. However, when the loading times substantially differ, there may be a high probability that the user really has already visited the third party web page.

According to an embodiment of the invention, the first party web page comprises a loading script element, wherein the loading script element comprises script code for loading the timing script element into the web browser from the first party and/or a second party web server. The loading script element may be a <script> tag having an URL to the timing script element that may be provided by the same or another web server. For example, the timing script element may be provided by the second party web server. The second party web server may provide an actual version of the timing script element and/or also may provide actual URLs, which may be embedded dynamically into the timing script element, for the one or more embedded elements to be loaded from the third party web server.

According to an embodiment of the invention, the timing script element sends the first and second loading time to the first party web server and/or a second party web server. The loading times may be either evaluated directly by the timing script element. In this case, the result, i.e. a value indicating, whether the embedded element previously has been loaded into the cache, may be sent to the first party web server and/or the second party web server. It also may be the case, that the first and second loading times, or optionally additional loading times, for the embedded element are alternatively or additionally evaluated by one or both of the first and second party web server.

According to an embodiment of the invention, the embedded element is loaded into the web browser via an URL. As already mentioned, the embedded element may be specified by an URL. As a first example, the timing script element may request the URL for the embedded element from the second party web server. As a second example, the URL may be encoded into the timing script element by the second party web server. The URL then may be included into a dynamically generated tag, for example as "src"-attribute.

According to an embodiment of the invention, a plurality of embedded elements are loaded for at least two times into the web browser and the two subsequent first and second loading times are determined for each embedded element. When more than one embedded element is tested, whether it already has been previously loaded into the cache, different third party web pages of the same or of different third party web server providers may be tested simultaneously.

According to an embodiment of the invention, the timing script element instructs the web browser to load the embedded element into the web browser for at least a third time and to determine at least a third loading time of the embedded element, wherein the decision, that the web browser has previously loaded the third party web page, is additionally based on at least the third loading time. For increasing the accuracy of measurement of the loading time, the embedded element may be loaded for more than two times. In this case, the test, whether the web browser has been previously loaded the third party web page and/or the embedded element, may be performed by determining, whether the first loading time is higher than the second and third loading time.

According to an embodiment of the invention, the method further comprises: determining, whether the difference between the first loading time and the second loading time is smaller than a threshold, and in this case deciding that the third party web page has been previously loaded. In the case, when the embedded element is not present in the browser cache, the first loading time will be much higher than the second loading time. To determine this, a difference between the first and the second loading time may be determined and compared with a threshold. This threshold may be static, for example may be a static value associated with the embedded element. For example, the threshold may be 120 ms.

According to an embodiment of the invention, the threshold is a dynamical threshold determined by the timing script element, the first party web server and/or a second party web server. It also may be possible that the threshold is not static but is determined based on the actual environment of the web browser. For example, a dynamical threshold may be determined based on a difference between the second and a third loading time, or a deviation of loading times of the embedded element after the first loading. Such a difference or deviation may be indicative of statistical fluctuations in the loading time. When the difference or deviation is much smaller, such as 1/2 or 1/3 of the first loading time, then it may be assumed that during the first loading time, the embedded element was loaded into the cache via the Internet.

According to an embodiment of the invention, the dynamical threshold depends on a size of the embedded element. The dynamical threshold may depend on the size, i.e. as larger the size as large the dynamical threshold may be.

According to an embodiment of the invention, the dynamical threshold depends on a loading time of a benchmarking element provided by the first party web server and/or a second party web server. It also may be possible to load a benchmarking element, such as an image, which may have a known size. From the first loading time of a benchmarking element, the bandwidth of the Internet connection of the web browser may be estimated.

According to an embodiment of the invention, the web browser is instructed during the first or second time to directly load the embedded element from the third party web server. Directly loading may mean that the embedded element is loaded via Internet, without loading it from the browser cache. It may be possible that for the first time, the web browser is admitted to load the embedded element either from the browser cache or via Internet, when the embedded element is not present in the browser cache. This may be the standard behavior of the web browser. For the second time, the web browser may be forced to directly load the embedded element via Internet. In such a way, when the first loading time is smaller than the second loading time, for example smaller by a threshold, it may be decided that the embedded element was not present in the browser cache. According to an embodiment of the invention, the web browser is instructed to at least once load the embedded element via an alternative URL containing a random query string. One possibility to force the web browser to directly load the embedded element from the third party server is by using the query string of the URL. The query string may be the last part of an URL after an "?". To the standard URL of the embedded element, a "?" and a random number may be appended. Since this alternative URL usually is not present in the browser cache, this may cause the web browser to load the embedded element directly from the third party server, which usually will ignore the query string.

According to an embodiment of the invention, the web browser is instructed to load the embedded element via an alternative URL containing a random query string without determining the loading time. This may be done, before the first and second loading time are determined and may improve the measurements, since the establishment of the TCP connection and the DNS lookup may not influence the length of the first loading time.

According to an embodiment of the invention, the method further comprises: scanning at least two third party web pages with a second party web server for embedded elements; searching for a set of embedded elements unique for each third party web page; and providing URLs for a set of unique embedded elements to the timing script element. It may be possible that the second party web server monitors the third party web servers, whether their content changes and/or whether embedded elements used for tracking are removed. Furthermore, the second party web server may search for elements in these web pages that potentially may be used as embedded elements for tracking.

When more than one embedded element provided by one web page are used for tracking, then a unique combination of embedded elements may be provided. For example, one embedded element may be a logo image of the third party web page provider. This logo image may be included into every web page of the third party web page provider. When further elements are searched in these web pages, a combination of embedded elements, such as one or more images, one or more scripts, etc. may be provided as a fingerprint for the respective web page.

When a third party web page is regularly monitored for possible embedded elements and in particular for removed and newly included embedded elements, a time dependent fingerprint for a web page may be generated. In this case, even a time range, when the web browser has accessed the third party web page, may be generated by determining, whether different fingerprints, i.e. different combinations of embedded elements, have previously been loaded by the web browser.

A further aspect of the invention relates to a computer program for determining, whether a web browser has accessed a third party web page, which, when being executed by at least one web server and/or a web browser, is adapted to carry out the steps of the method as described in the above and in the following. For example, the computer program may comprise code executed by the first party web server and/or the second party web server. Furthermore, the computer program may comprise the loading and/or timing script elements.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a script element to be embedded into a web page of a first party web server and to be executed by a web browser, which is processing the web page, the script element comprising script code for: requesting or encoding at least one URL for at least one embedded element of a third party web page; instructing the web browser to load the embedded element into the browser for a first time and to determining a first loading time of the embedded element; instructing the web browser to load the embedded element into the browser for a second time and to determining a second loading time of the embedded element; and for sending the first loading time and the second loading time and/or timing data determined from the first loading time and the second loading time to the first party web server or a second party web server.

The first loading time and/or the second loading time may include absolute time values, such as the loading start time and/or the loading end time. Furthermore, the first loading time and/or the second loading time may include time differences, for example between the loading start time and/or the loading end time. The timing data may include further absolute time values and/or time differences and/or values derived from these. One possible timing data may be the decision, whether an embedded element has been loaded, which may be encoded with "yes" and "no" or may be encoded with "1" and "0". Other possible time data may be the decision that the third party web page has been previously loaded. However, the timing data also may be determined server side, for example by the first party web server and/or the second party web server.

A further aspect of the invention relates to a tracking system, which may comprise the first and/or the second party web server. The web servers may comprise hardware devices and/or may be provided by a virtual machine that, for example, may be provided by a cloud computing facility.

According to an embodiment of the invention, the tracking system comprises a first party web server for providing a first party web page, which first party web page comprises or embeds a timing script element as described in the above and in the following.

According to an embodiment of the invention, the tracking system comprises a second party web server as described in the above and in the following for providing a timing script element for embedding into a first party web page and/or for deciding based on the first loading time and second loading time, whether the web browser has been previously loaded the third party web page.

It has to be understood that features of the method as described in the above and in the following may be features of the computer program, the computer-readable medium and/or the tracking system as described in the above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a tracking system according to an embodiment of the invention.
Fig. 2 shows a flow diagram for a tracking method according to an embodiment of the invention.
Fig. 3 shows a diagram with loading times produced by the method of Fig. 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

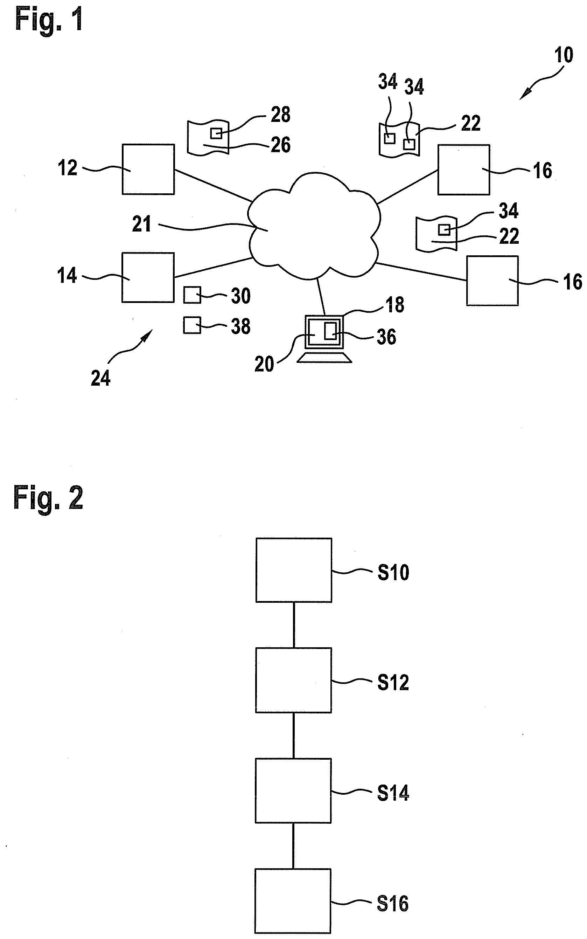

Fig. 1 shows a system 10 comprising a first party web server 12, a second party web server 14 and one or more third party web servers 16. The first party web server 12 may also perform the tasks and/or functions of the second party web server 14 as described in the above and in the following. The web servers 12, 14, 16 may be remote from each other and/or may be either implemented as separate hardware devices. It also may be possible that the servers 12, 14, 16 are implemented as virtual machines in cloud computing facilities.

Furthermore, the system 10 comprises a computing device 18, such as a PC, tablet, smartphone, etc, which comprises a web browser 20, which may be executed by the computing device 18. The web servers 12, 14, 16 and the computing device 18 are interconnected via the Internet 21 and/or may communicate with each other via the HTTP/HTTPS-protocol.

The third party web servers 16, which are operated by one or more third party providers, may provide one or more web pages 22, which may be accessed by the web browser 20. A user of the computing device 18 may surf in the Internet, i.e. may request and display web pages via the web browser 20, and may visit the web page(s) 22 of the third party web server(s) 16. The web page(s) 22 may be encoded in HTML and the web browser 20 may be adapted for decoding HTML and to display corresponding text and/or graphics encoded in the web page(s) 22 on a display of the computing device 18.

For example, the web page(s) 22 may contain information, advertisement about specific products, etc. from the third party provider(s).

The first party provider, operating the first party web server 12, has interest, whether the user of the computing device 18 has visited the web page(s) 22 of the third party provider.

For example, the first party provider may be a competitor of the third party providers and may know, whether the user has watched specific advertisements and/or specific products of the third party provider(s).

To gain information about this, the first party provider uses a tracking system 24 provided by the first party web server 12 and the second party web server 14. The second party web server 14 may be provided by a second party provider, which may support the first party provider in performing the tracking of the user. Usually, the second party provider may support a plurality of the first party providers simultaneously.

Whenever the user of the computing device 18 and in particular the web browser 20 visits and/or requests a specific web page 26, the tracking system 14 tests, whether the web browser 20 already has visited the web page(s) 22 of the third party provider(s). As the web page(s) 22, the web page 26 may be encoded in HTML and the web browser 20 may be adapted for decoding HTML and to display corresponding text and/or graphics encoded in the web page 26 on a display of the computing device 18. For example, the web page 26 may be a page of a user portal of the first party provider and/or may contain information, advertisement about specific products, etc. from the first party provider.

The web page 26 may comprise a loading script element 28, which, when the web browser 20 requests the web page 26, is executed. The loading script element 28 may then request and/or execute a timing script element 30 from the second party web server 30. The timing script element 30, which may be created dynamically from the second party web server 14, may comprise information about the one or more third party web page(s) 22 and/or about one or more embedded elements 34 encoded into the third party web pages(s) 22.

The loading script element 28 and the timing script element 30 may be encoded in Javascript ©. In general, the script elements 28, 30 may comprise script code, executable by the web browser 20.

The embedded elements 34 may be elements that are stored separately from the third party web page, i.e. may have an URL different from the web page 22. This URL may be encoded into the timing script element 30. For example, the embedded elements may be images, movies, embedded web pages, embedded frames, scripts, style sheets, etc. When the web browser 20 requests the web page 22, it will decode the web page 22, and will separately load the one or more embedded elements 34.

When executed by the web browser 20, the timing script element 30 may instruct the web browser 20 to load the one or more embedded elements 34. The web browser 20 then will check, whether the corresponding embedded element 34 is already present in a browser cache 36. If this is not the case, the web browser 20 will load the embedded element 34 via Internet into the browser cache 36. Since the loading time of the embedded element 34 strongly depends on whether it is present in the browser cache 36 or not, i.e. whether it only has to be loaded from a local storage of the computing device 18 or from a remote storage of the web server 16, the loading time may give an indication, whether the embedded element already was requested by the web browser 20. In this case, it may be assumed that the user already has visited the third party web page 22.

For benchmarking the web browser 20, the second party web server 14 may provide a benchmarking element 38, which, for example, may be an image. The timing script element 30 may instruct the web browser 20 to load the benchmarking element 38 and/or may measure this benchmarking loading time. For example, the URL of the benchmarking element 38 may be made different for every call of the timing script element 30 by the second party web server 14. In this case, the benchmarking loading time may give an indication about the bandwidth of the computing device 18 and/or the web browser 20. A threshold for the loading time(s) of the embedded element(s) 34 may then be based on the benchmarking loading time.

Fig. 2 shows a flow diagram for a tracking method, i.e. a method for determining, whether the web browser 20 has accessed a third party web page 22.

In step S10, the first party web page 26 is provided by the first party web server 12, which first party web page 26 comprises or is adapted for loading the timing script element 30. For example, the first party web page 26 comprises a loading script element 28, which may be simply based on a <script>-tag.

In step S12, the user accesses the first party web page 26, which is then loaded via Internet 21 and processed by the web browser 20. Usually, the web browser 20 will display images and texts encoded into the web page 26 and will execute the script code encoded into the web page 26.

When the web browser reaches the loading script element 28, which may comprise an URL of the timing script element 30, the web browser 20 loads the timing script element 30 from the second party web server 14 and executes it.

The timing script element 30 then instructs the web browser 20 to load an embedded element 34, which is embedded into a third party web page 22, into the web browser 20 for at least two times and to determine a first loading time t₁ and a second loading time t₂ of the embedded element 34. It may be possible that more than one embedded element 34 is loaded from one and/or more third party web pages 22.

It may be possible that the timing script element 30 is dynamically generated by the second party web server 14. For example, generation of the timing script element 30 may be based on an identification of the user.

There are several possibilities, how the user is identified at the first party web server 12 and/or the second party web server 14. The user may be authenticated at the first party provider and/or first party web server 26. For example, the user may have logged into a user portal, which also may provide the web page 26. It also may be possible to identify the user via other information, such as unique identifiers provided by the computing device, such as a device serial number. Also, Cookies may be used for identifying the user. Furthermore, a unique fingerprint of the user may be determined from the configuration of the web browser 20 and/or the computing device 18, which may comprise a type and/or version number of the web browser 20 and/or separately installable subcomponents, such as plugins, of the web browser. Such information, for example, may be gathered by the loading script element 28, which is then sent to the first and/or second party web server 12, 14 and there evaluated.

For example, the embedded element 34 may be loaded into the web browser 20 via an URL. The timing script element 30 may request the URL for the embedded element 34 from the second party web server 14 or the URL may be encoded into the timing script element 30.

It also may be possible that the timing script element 30 instructs the web browser 20 to load the embedded element 34 into the web browser 20 for more than two times and to determine additional loading times of the embedded element 34.

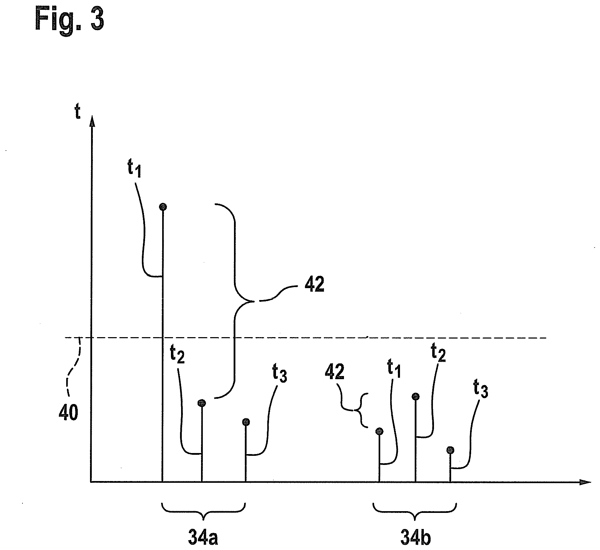

For example, Fig. 3 shows a diagram with loading times for two different embedded elements 34a, 34b. For example, the first embedded element 34a may be included into a first web page 22 of a first third party provider and the second element 34b may be included into a second web page 22 of a second third party provider. In the following it is assumed that the user has visited the web page 22 of the second third party provider but not the one of the first third party provider.

The loading script element 30 instructs the web browser 20 to load the first embedded element 34a and the second embedded element 34b for a first loading time t₁, a second loading time t₂ and a third loading time t₃. As may be seen from the diagram, for the first embedded element 34a, the first loading time t₁ is higher then the second loading time t₂ and the third loading time t₃. Thus, it may be assumed that the first embedded element 34a has been loaded into the browser cache 20 via Internet and that the corresponding third party web page 22 has not been visited by the user. On the other hand, the three loading times t₁, t₂ and t₃ of the second embedded element 34b are substantially the same. Thus, it may be assumed that the embedded element 34b already has been loaded into the browser cache 36 and that the corresponding web page has been visited by the user.

Each loading time t₁, t₂ and t₃ may be measured in the following way. The timing script element 30 may generate an HTML object for the embedded element 34 dynamically, for example, by accessing the document object model of the web page 26. When setting the URL of the embedded element in the HTML object, which instructs the web browser to start loading the embedded element 34, a first time may be measured. For example, the URL may be set by setting the src-attribute of an image tag. Furthermore, the timing script element 30 may set the OnLoad-event of the embedded element 34 with a function, which measures a second time and which is called, when the web browser has finished loading the embedded element. After that, the difference between the second time and the first time may be calculated as the loading time.

Returning to Fig. 2, in step S14, it is decided based on the loading times t₁, t₂, t₃, whether the web browser 20 has previously loaded the third party web page 22. This decision may be made by the timing script element 30, i.e. the web browser of the second party web server 14. For example, the timing script element 30 may send the loading times t₁, t₂, t₃ (or even the first and second measured time before and after the loading) to the second party web server 14, which then evaluates the received information.

With respect to Fig. 3, the decision that the web browser 20 has previously loaded the third party web page 22 may be based on a threshold 40. This threshold may be determined from the loading times t₁, t₂ and t₃ and/or the loading time of a benchmarking element 38, which also may be loaded by the timing script element 30 and/or which loading time(s) may be sent to the second party web server 14. For example, the timing script element 30 itself may be the benchmarking element 38.

The threshold 40 may be a dynamical threshold determined by the timing script element 30, the first party web server 12 and/or a second party web server 14. For example, the threshold 40 may be determined from a size of the embedded element 34. It also may be possible that the threshold 40 depends on an average value of the second and subsequent loading times t₁, t₂, t₃.

The decision that the third party web page 22 previously has been loaded may be based on, whether the first loading time t₁ and/or difference 42 between the first loading time t₁ and the second loading time t₂ (or an average value of the second and subsequent loading times) is smaller than the threshold 40.

With respect to the example of Fig. 3, since the loading time t₁ of the first embedded element 34a is higher than the threshold 40, it may be determined that the corresponding web page 22 has not been visited by the user. On the other hand, the loading time t₁ of the second embedded element 34_{b} is lower than the threshold 40, and it may be determined that the corresponding web page 22 has been visited by the user.

It also may be possible that a difference 42 between the first loading time t₁ and the second loading time t₂ is determined and compared with a threshold 40.

A further possibility is to instruct the web browser 20 to firstly load the embedded element 34 directly from the third party web server 16 with an alternative URL without determining the loading time and/or without influencing the browser cache 36 with respect to the standard URL of the embedded element 34. When this is done before the embedded element 34 is loaded two or more times as described above, this may improve the determination of the loading times t₁, t₂, t₃, since, the establishment of the TCP connection and the DNS lookup may not influence the length of the loading times.

For example, when the embedded element 34 is referenced in the third party web page with ".../image.jpg" as standard URL, the web browser 20 may be made to believe that a different embedded element is to be loaded by providing the URL ".../imagejpg?1233646", i.e. an URL with a random query string. The web browser will look into the browser cache 36, will not find the alternative URL and will load the embedded element via Internet, since usually the third party web server 16 will ignore the query string. This also may not influence the browser cache 36 with respect to the standard URL, which may be tested as described above.

This behavior also may be used for determining a loading time t₁, t₂, t₃ of the embedded element 34, which corresponds to loading the embedded element via Internet from the third party web server 22. In other words, in the above, the first loading time, second loading time and/or further loading times may be determined with an alternative URL based on a random query string.

In general, more than one embedded element 34 of one third party web page 22 may be loaded for at least two times into the web browser 20 and two subsequent loading times t₁, t₂, or more are determined for each embedded element 34. For example, the third party web server 16 may provide more than one web page 22, which, however, comprises different combinations of embedded elements 34. By identifying the combination of embedded elements 34, which have been loaded into the browser cache 36, even the respective web page 22 may be identified.

Furthermore, it may be possible that not only one but two or more third party web pages 22 of different third party providers are tested with one timing script element 30.

The information, whether a user has visited a specific third party web page 22 or not may be stored in a user profile of the user in the first party web server 12 and/or the second party web server 14. For example, the user profile may be identified as described above via an authentication and/or identification of the user.

The second party web server 14 automatically may identify embedded elements 34 embedded into a third party web page 22, when a timing script element 30 for the third party web page 22 should be generated. It also may be possible that the second party web server 14 automatically and/or regularly checks, whether the third party web page 22 and/or corresponding elements 34 has changed.

In particular, the second party web server may identify a unique embedded element 34 and/or a unique combination of embedded elements 34.

Therefore, in step S16, the second party web server 14 scans at least two third party web pages 22 for embedded elements 34 and searches for a set of embedded elements 34 unique for each third party web page 22. The URLs for a set of unique embedded elements 34 may be provided for the timing script element 30.

While the invention has been illustrated and described in detail in the drawings and foregoing description, embodiments of the invention are defined in the claims.

### LIST OF REFERENCE SYMBOLS

- 10: system
- 12: first party web server
- 14: second party web server
- 16: third party web server
- 18: computing device
- 20: web browser
- 21: Internet
- 22: third party web page
- 24: tracking system
- 26: first party web page
- 28: loading script element
- 30: timing script element
- 34: embedded element
- 36: browser cache
- 38: benchmarking element
- 40: threshold

## Claims

1. A method for determining, whether a web browser (20) has accessed a third party web page (22), the method comprising:
providing a first party web page (26) by a first party web server (12), which first party web page (26) comprises a loading script element (28), wherein the loading script element (28) comprises script code for loading a timing script element (30) into the web browser (20) from a second party web server (14);
processing the first party web page (26) with the web browser (20), such that the timing script element (30) instructs the web browser (20) to load an embedded element (34), which is embedded into the third party web page (22), into the web browser (20) for a first time and to determine a first loading time (t₁) of the embedded element (34), and the timing script element (30) instructs the web browser (20) to load the embedded element (34) into the web browser (20) for a second time and to determine a second loading time (t₂) of the embedded element (34), wherein the timing script element (30) requests an URL for the embedded element (34) from the second party web server (14) or the URL is encoded into the timing script element (30);
deciding based on the first loading time (t₁) and the second loading time (t₂), whether the web browser (20) has previously loaded the third party web page (22);
wherein the web browser (20) is instructed to at least once load the embedded element (34) via an alternative URL containing a random query string, before the first loading time (t₁) and the second loading time (t₂) are determined.

2. The method of claim 1,
wherein the timing script element (30) sends the first loading time (t₁) and the second loading time (t₂) to the first party web server (12) and/or the second party web server (14).

3. The method of one of the previous claims,
wherein a plurality of embedded elements (34) are loaded for at least two times into the web browser (20) and two subsequent loading times (t₁, t₂) are determined for each embedded element (34).

4. The method of one of the previous claims,
wherein the timing script element (30) instructs the web browser (20) to load the embedded element (34) into the web browser (20) for at least a third time and to determine at least a third loading time (t₃) of the embedded element (34);
wherein the decision, that the web browser (20) has previously loaded the third party web page (22) is additionally based on the at least third loading time (t₃).

5. The method of one of the previous claims, further comprising:
determining, whether a threshold (40) is smaller than the first loading time (t₁) and/or a difference (42) between the first loading time (t₁) and the second loading time (t₂) and, when the threshold is smaller, deciding that the third party web page has not been previously loaded.

6. The method of claim 5,
wherein the threshold (40) is a dynamical threshold determined by the timing script element (30), the first party web server (12) and/or the second party web server (14).

7. The method of one of claims 1 to 4,
wherein the web browser (20) is instructed during the first or second time to directly load the embedded element (34) from a third party web server (16) that provides the third party web page (22).

8. The method of one of the previous claims,
wherein the embedded element (34) is an element of the third party web page (22), which is requestable from a third party web server (16) that provides the third party web page (22), with an URL different from the URL of the third party web page (22); and/or
wherein the embedded element (34) is an image, a cascading style sheet and/or a script element.

9. The method of one of the previous claims, further comprising:
scanning at least two third party web pages (22) for embedded elements (34) with the second party web server (14);
searching for a set of embedded elements (34) unique for each third party web page (22);
providing URLs for a set of unique embedded elements (34) to the timing script element (30).

10. A computer program for determining, whether a web browser (20) has accessed a third party web page (22), which, when being executed by at least one web server (12, 14) and a web browser (20), is adapted to carry out the steps of the method of one of the previous claims.

11. A computer-readable medium, in which a computer program according to claim 10 is stored.

12. A tracking system (24) for determining, whether a web browser (20) has accessed a third party web page (22), the system comprising: a first party web server (12) and a second party web server (14), wherein the first party web server (12) is adapted to provide a first party web page (26), which first party web page (26) comprises a loading script element (28), wherein the loading script element (28) comprises script code for loading a timing script element (30) into the web browser (20) from the second party web server (14); wherein the first party web page (26) is processed with the web browser (20), such that the timing script element (30) instructs the web browser (20) to load an embedded element (34), which is embedded into the third party web page (22), into the web browser (20) for a first time and to determine a first loading time (t1) of the embedded element (34), and the timing script element (30) instructs the web browser (20) to load the embedded element (34) into the web browser (20) for a second time and to determine a second loading time (t2) of the embedded element (34), wherein the timing script element (30) requests an URL for the embedded element (34) from the second party web server (14) or the URL is encoded into the timing script element (30); wherein the second party web server (14) is adapted to decide based on the first loading time (t1) and the second loading time (t2), whether the web browser (20) has previously loaded the third party web page (22); and wherein the web browser (20) is instructed to at least once load the embedded element (34) via an alternative URL containing a random query string, before the first loading time (t1) and the second loading time (t2) are determined.

## Patentansprüche

1. Verfahren zum Bestimmen, ob ein Webbrowser (20) auf eine Drittanbieter-Webseite (22) zugegriffen hat, wobei das Verfahren Folgendes umfasst:
Bereitstellen einer Erstanbieter-Webseite (26) durch einen Erstanbieter-Webserver (12), wobei die Erstanbieter-Webseite (26) ein Skriptladeelement (28) umfasst, wobei das Skriptladeelement (28) einen Skriptcode zum Laden eines Skriptzeitsteuerungselements (30) in den Webbrowser (20) von einem Zweitanbieter-Webserver (14) umfasst;
Verarbeiten der Erstanbieter-Webseite (26) mit dem Webbrowser (20), so dass das Skriptzeitsteuerungselement (30) den Webbrowser (20) anweist, ein eingebettetes Element (34), das in die Drittanbieter-Webseite (22) eingebettet ist, in den Webbrowser (20) für eine erste Zeit zu laden und eine erste Ladezeit (t₁) des eingebetteten Elements (34) zu bestimmen, und das Skriptzeitsteuerungselement (30) den Webbrowser (20) anweist, das eingebettete Element (34) in den Webbrowser (20) für eine zweite Zeit zu laden und eine zweite Ladezeit (t₂) des eingebetteten Elements (34) zu bestimmen, wobei das Skriptzeitsteuerungselement (30) einen URL für das eingebettete Element (34) von dem Zweitanbieter-Webserver (14) anfordert oder der URL in das Skriptzeitsteuerungselement (30) eingebettet ist;
Entscheiden basierend auf der ersten Ladezeit (t₁) und der zweiten Ladezeit (t₂), ob der Webbrowser (20) zuvor die Drittanbieter-Webseite (22) geladen hat;
wobei der Webbrowser (20) angewiesen wird, mindestens ein Mal das eingebettete Element (34) über einen alternativen URL, der eine zufällige Abfragezeichenfolge aufweist, zu laden, bevor die erste Ladezeit (t₁) und die zweite Ladezeit (t₂) bestimmt werden.

2. Verfahren nach Anspruch 1,
wobei das Skriptzeitsteuerungselement (30) die erste Ladezeit (t₁) und die zweite Ladezeit (t₂) an den Erstanbieter-Webserver (12) und/oder den Zweitanbieter-Webserver (14) sendet.

3. Verfahren nach einem der Ansprüche,
wobei mehrere eingebettete Elemente (34) mindestens zwei Mal in den Webbrowser (20) geladen werden und zwei nachfolgende Ladezeiten (t₁, t₂) für jedes eingebettete Element (34) bestimmt werden.

4. Verfahren nach einem der Ansprüche,
wobei das Skriptzeitsteuerungselement (30) den Webbrowser (20) anweist, das eingebettete Element (34) in den Webbrowser (20) mindestens ein drittes Mal zu laden und mindestens eine dritte Ladezeit (t₃) des eingebetteten Elements (34) zu bestimmen;
wobei die Entscheidung, dass der Webbrowser (20) zuvor die Drittanbieter-Webseite (22) geladen hat, zusätzlich auf der mindestens dritten Ladezeit (t₃) basiert.

5. Verfahren nach einem der vorhergehenden Ansprüche, ferner umfassend:
Bestimmen, ob eine Schwelle (40) kleiner ist als die erste Ladezeit (t₁) und/oder eine Differenz (42) zwischen der ersten Ladezeit (t₁) und der zweiten Ladezeit (t₂) und, wenn die Schwelle kleiner ist, Entscheiden, dass die Drittanbieter-Webseite zuvor nicht geladen wurde.

6. Verfahren nach Anspruch 5,
wobei die Schwelle (40) eine dynamische Schwelle ist, die durch das Skriptzeitsteuerungselement (30), den Erstanbieter-Webserver (12) und/oder den Zweitanbieter-Webserver (14) bestimmt wird.

7. Verfahren nach einem der Ansprüche 1 bis 4,
wobei der Webbrowser (20) angewiesen wird, während der ersten oder zweiten Zeit, das eingebettete Element (34) von einem Drittanbieter-Webserver (16), der die Drittanbieter-Webseite (22) bereitstellt, direkt zu laden.

8. Verfahren nach einem der Ansprüche,
wobei das eingebettete Element (34) ein Element der Drittanbieter-Webseite (22) ist, das von einem Drittanbieter-Webserver (16), der die Drittanbieter-Webseite (22) bereitstellt, anforderbar ist, mit einem URL, der sich von dem URL der Drittanbieter-Webseite (22) unterscheidet;
und/oder
wobei das eingebettete Element (34) ein Bild, ein Cascading Stylesheet und/oder ein Skriptelement ist.

9. Verfahren nach einem der vorhergehenden Ansprüche, ferner umfassend:
Durchsuchen von mindestens zwei Drittanbieter-Webseiten (22) auf eingebettete Elemente (34) mit dem Zweitanbieter-Webserver (14);
Suchen nach einem Satz von eingebetteten Elementen (34), die für jede Drittanbieter-Webseite (22) eindeutig sind;
Bereitstellen von URLs für einen Satz von eindeutigen eingebetteten Elementen (34) dem Skriptzeitsteuerungselement (30) .

10. Computerprogramm zum Bestimmen, ob ein Webbrowser (20) auf eine Drittanbieter-Webseite (22) zugegriffen hat, das, wenn es durch mindestens einen Webserver (12, 14) und einen Webbrowser (20) ausgeführt wird, ausgelegt ist, um die Schritte des Verfahrens nach einem der vorhergehenden Ansprüche auszuführen.

11. Computerlesbares Medium, in dem ein Computerprogramm nach Anspruch 10 gespeichert ist.

12. Nachverfolgungssystem (24) zum Bestimmen, ob ein Webbrowser (20) auf eine Drittanbieter-Webseite (22) zugegriffen hat, wobei das System Folgendes umfasst: einen Erstanbieter-Webserver (12) und einen Zweitanbieter-Webserver (14), wobei der Erstanbieter-Webserver (12) ausgelegt ist, um eine Erstanbieter-Webseite (26) bereitzustellen, wobei die Erstanbieter-Webseite (26) ein Skriptladelement (28) umfasst, wobei das Skriptladeelement (28) einen Skriptcode zum Laden eines Skriptzeitsteuerungselements (30) in den Webbrowser (20) von dem Zweitanbieter-Webserver (14) umfasst; wobei die Erstanbieter-Webseite (26) mit dem Webbrowser (20) verarbeitet wird, so dass das Skriptzeitsteuerungselement (30) den Webbrowser (20) anweist, ein eingebettetes Element (34), das in die Drittanbieter-Webseite (22) eingebettet ist, in den Webbrowser (20) für eine erste Zeit zu laden und eine erste Ladezeit (t₁) des eingebetteten Elements (34) zu bestimmen, und das Skriptzeitsteuerungselement (30) den Webbrowser (20) anweist, das eingebettete Element (34) in den Webbrowser (20) für eine zweite Zeit zu laden und eine zweite Ladezeit (t₂) des eingebetteten Elements (34) zu bestimmen, wobei das Skriptzeitsteuerungselement (30) einen URL für das eingebettete Element (34) von dem Zweitanbieter-Webserver (14) anfordert oder der URL in das Skriptzeitsteuerungselement (30) eingebettet ist; wobei der Zweitanbieter-Webserver (14) ausgelegt ist, um basierend auf der ersten Ladezeit (t₁) und der zweiten Ladezeit (t₂) zu entscheiden, ob der Webbrowser (20) zuvor die Drittanbieter-Webseite (22) geladen hat; und wobei der Webbrowser (20) angewiesen wird, mindestens ein Mal das eingebettete Element (34) über einen alternativen URL, der eine zufällige Abfragezeichenfolge aufweist, zu laden, bevor die erste Ladezeit (t₁) und die zweite Ladezeit (t₂) bestimmt werden.

## Revendications

1. Procédé pour déterminer si un navigateur Web (20) a accédé à une page Web de tierce partie (22), le procédé comprenant de :
fournir une page Web de première partie (26) par un serveur Web de première partie (12), laquelle page Web de première partie (26) comprend un élément de script de chargement (28), dans lequel l'élément de script de chargement (28) comprend un code de script pour charger un élément de script de temporisation (30) dans le navigateur Web (20) à partir d'un serveur Web de deuxième partie (14);
traiter la page Web de première partie (26) avec le navigateur Web (20), de telle sorte que l'élément de script de temporisation (30) ordonne au navigateur Web (20) de charger un élément intégré (34), qui est intégré dans la page Web de tierce partie (22), dans le navigateur Web (20) pendant un premier temps et de déterminer un premier temps de chargement (t₁) de l'élément intégré (34), et l'élément de script de temporisation (30) ordonne au navigateur Web (20) de charger l'élément intégré (34) dans le navigateur Web (20) pendant un deuxième temps et de déterminer un second temps de chargement (t₂) de l'élément intégré (34),
dans lequel l'élément de script de temporisation (30) demande une URL de l'élément intégré (34) auprès du serveur Web de deuxième partie (14) ou l'URL est codée dans l'élément de script de temporisation (30);
décider, sur la base du premier temps de chargement (t₁) et du deuxième temps de chargement (t₂), si le navigateur Web (20) a précédemment chargé la page Web de tierce partie (22) ;
dans lequel le navigateur Web (20) reçoit l'ordre de charger au moins une fois l'élément intégré (34) par l'intermédiaire d'une autre URL contenant une chaîne d'interrogation aléatoire, avant que le premier temps de chargement (t₁) et le deuxième temps de chargement (t₂) soient déterminés.

2. Procédé selon la revendication 1,
dans lequel l'élément de script de temporisation (30) envoie le premier temps de chargement (t₁) et le deuxième temps de chargement (t₂) au serveur Web de première partie (12) et/ou au serveur Web de deuxième partie (14).

3. Procédé selon l'une quelconque des revendications précédentes,
dans lequel une pluralité d'éléments intégrés (34) sont chargés pendant au moins deux temps dans le navigateur Web (20) et deux temps de chargement subséquents (t₁, t₂) sont déterminés pour chaque élément intégré (34).

4. Procédé selon l'une quelconque des revendications précédentes,
dans lequel l'élément de script de temporisation (30) ordonne au navigateur Web (20) de charger l'élément intégré (34) dans le navigateur Web (20) pendant au moins un troisième temps et de déterminer au moins un troisième temps de chargement (t₃) de l'élément intégré (34) ;
dans lequel la décision selon laquelle le navigateur Web (20) a chargé précédemment la page Web de tierce partie (22) est basée en outre sur le au moins troisième temps de chargement (t₃).

5. Procédé selon l'une quelconque des revendications précédentes, comprenant en outre de :
déterminer si un seuil (40) est inférieur au premier temps de chargement (t₁) et/ou une différence (42) entre le premier temps de chargement (t₁) et le deuxième temps de chargement (t₂) et, lorsque le seuil est inférieur, décider que la page Web de tierce partie n'a pas été chargée précédemment.

6. Procédé selon la revendication 5,
dans lequel le seuil (40) est un seuil dynamique déterminé par l'élément de script de temporisation (30), le serveur Web de première partie (12) et/ou le serveur Web de deuxième partie (14).

7. Procédé selon l'une des revendications 1 à 4,
dans lequel le navigateur Web (20) reçoit l'ordre au cours du premier ou du deuxième temps de charger directement l'élément intégré (34) à partir d'un serveur Web de tierce partie (16) qui fournit la page Web de tierce partie (22).

8. Procédé selon l'une quelconque des revendications précédentes,
dans lequel l'élément intégré (34) est un élément de la page Web de tierce partie (22), qui peut être demandé auprès d'un serveur Web de tierce partie (16) qui fournit la page Web de tierce partie (22), avec une URL différente de l'URL de la page Web de tierce partie (22); et/ou
dans lequel l'élément intégré (34) est une image, une feuille de style en cascade et/ou un élément de script.

9. Procédé selon l'une quelconque des revendications précédentes, comprenant en outre de :
rechercher des éléments intégrés (34) dans au moins deux pages Web de tierce partie (22) avec le serveur Web de deuxième partie (14);
rechercher un ensemble d'éléments intégrés (34) uniques pour chaque page Web de tierce partie (22);
fournir des URL pour un ensemble d'éléments intégrés uniques (34) à l'élément de script de temporisation (30).

10. Programme d'ordinateur pour déterminer si un navigateur Web (20) a accédé à une page Web de tierce partie (22) qui, lorsqu'il est exécuté par au moins un serveur Web (12, 14) et un navigateur Web (20), est conçu pour exécuter les étapes du procédé selon l'une quelconque des revendications précédentes.

11. Support lisible par ordinateur, sur lequel est stocké un programme d'ordinateur selon la revendication 10.

12. Système de suivi (24) pour déterminer si un navigateur Web (20) a accédé à une page Web de tierce partie (22), le système comprenant : un serveur Web de première partie (12) et un serveur Web de deuxième partie (14), dans lequel le serveur de première partie (12) est conçu pour fournir une page Web de première partie (26), laquelle page Web de première partie (26) comprend un élément de script de chargement (28), dans lequel l'élément de script de chargement (28) comprend un code de script pour charger un élément de script de temporisation (30) dans le navigateur Web (20) à partir du serveur Web de deuxième partie (14) ; dans lequel la page Web de première partie (26) est traitée avec le navigateur Web (20), de telle sorte que l'élément de script de temporisation (30) ordonne au navigateur Web (20) de charger un élément intégré (34), qui est intégré dans la page Web de tierce partie (22), dans le navigateur Web (20) pendant un premier temps et de déterminer un premier temps de chargement (t₁) de l'élément intégré (34), et l'élément de script de temporisation (30) ordonne au navigateur Web (20) de charger l'élément intégré (34) dans le navigateur Web (20) pendant un deuxième temps et de déterminer un deuxième temps de chargement (t₂) de l'élément intégré (34), dans lequel l'élément de script de temporisation (30) demande une URL pour l'élément intégré (34) auprès du serveur Web de deuxième partie (14) ou l'URL est codée dans l'élément de script de temporisation (30); dans lequel le serveur Web de deuxième partie (14) est apte à décider, sur la base du premier temps de chargement (t₁) et du deuxième temps de chargement (t₂), si le navigateur Web (20) a précédemment chargé la page Web de tierce partie (22); et dans lequel le navigateur Web (20) reçoit l'ordre de charger au moins une fois l'élément intégré (34) par l'intermédiaire d'une autre URL contenant une chaîne d'interrogation aléatoire, avant que le premier temps de chargement (t₁) et le deuxième temps de chargement (t₂) soient déterminés.
